# EUROPEAN PATENT APPLICATION

(11) **EP 4 654 386 A1**
(43) Date of publication of application: **26.11.2025**
(21) Application number: 24177977.6
(22) Date of filing: 24.05.2024
(51) Int. Cl.: H01R 4/18

(54) **SPLICES FOR FLAT MAGNETIC WIRES**

(71) Applicant: TE Connectivity India Private Limited, Karnataka 560066 (IN); TE Connectivity Italia Distribution S.r.l., 10093 Collegno (TO) (IT)
(72) Inventor: De Pasquale, Fabio, Collegno (IT); Pereira, Clinton, Bangalore (IN); Aime, Ugo, Collegno (IT)
(74) Representative: Grünecker Patent- und Rechtsanwälte PartG mbB

(57) **Abstract**

Splices for the electrical connection of flat magnetic wires are described, wherein the splices comprise a base, a first tine and a second tine, each protruding from one of the two opposite extremities of the base so as to form a U-shaped structure. The base of the splice is flat so as to define an XY plane, wherein the Y direction is parallel to the insertion direction of the flat magnetic wire into the splice. According to a first aspect, the first tine and the second tine are asymmetric, so as to allow an overlapping crimping of the first tine and the second tine around the flat magnetic wire. Alternatively, according to a second aspect, the splice, in an elongated state, has a length greater than 19 mm for example comprised between 19.1 mm and 30 mm, for example of 20.95 mm or 28.51 mm.

## Description

The present invention relates to splices for electrical connections. More in particular, the present invention concerns splices for flat magnetic wires.

### State of the art

This invention concerns splices used to connect flat magnetic wires, for example, of a stator of an electric motor, for example HAIRPIN motors.

Currently, to connect flat magnetic wires, processes like brazing, soldering and welding are normally used. These processes require wire preparation, because it is necessary to pre-strip the wires, heating processes and the construction of designed soldering stations along the production line. In this way, the costs of the termination process are high and the processes are often time consuming and not as precise as desirable: the quality of the termination is often not enough. Moreover, the cited processes are not environment friendly and they also imply possible risks for the operators implementing them.

There are several reasons why it is necessary to find more efficient techniques to connect flat magnetic wires. For example, flat magnetic wires optimize the filling factor in winding process, permit to exchange more electrical power than the standard round wire. Moreover, they permit a better heat dissipation, enable to improve the design of the coil, improve the efficiency of the magnetic field, due to the better frequency characteristics, and enable to improve the design of the coil bringing to a more efficient magnetic field.

For example, a flat magnetic wire can be the termination of the stator of a high power electric motor, for example of an electric car.

A flat magnetic wire can comprises a conductive core and an insulating coating layer. The conductive core is made, for example of copper, or any other suitable conductive material, and the insulting coating layer is made of an insulating material, for example one to four layers of polymer film.

The dimensions of a flat magnetic wire are comprised, for example, between 1 mm and 6 mm thickness and 3.15 mm and 20 mm width.

As known from the state of the art, in order to crimp a splice around a wire, a crimper device, comprising an anvil on which the splice is placed and a crimper to crimp the splice, can be used.

The wire to be connected is put into the splice, then the crimper crimps the splice on top of the wire.

Standard splices known from the state of the art are not suitable to connect flat magnetic wire, because they do not have the suitable shape and/or dimensions, for example, they are too small to host a flat magnetic wire and/or they do not allow a proper crimping of the tines around a flat magnetic wire.

Crimping is a green process. No soldering or any chemical process are involved. In this way, all the environmental problem related to these processes are avoided and also all the possible risks for the operators.

It is, therefore, scope of the present invention to improve the termination of flat magnetic wires, so as to obtain a process that does not require the pre-stripping of the wires, that is precise, produce reliable terminations, is green, is not dangerous for the operator and is cheaper and easier to implement.

### Summary

The present invention provides splices for the electrical connection of flat magnetic wires, wherein the splices comprise a base, a first tine and a second tine, each protruding from one of the two opposite extremities of the base so as to form a U-shaped structure.

According to the present invention, the base of the splice is flat so as to define an XY plane, wherein the Y direction is parallel to the insertion direction of the flat magnetic wire into the splice. A splice comprising a flat base is particularly suitable to host a flat magnet wire. In fact, a flat magnet wire has a rectangular profile, along the XY plane, that fits onto a splice with a flat base.

The present invention is based on the idea of providing the first tine and the second tine asymmetric, so as to allow an overlapping crimping of the first tine and the second tine around the flat magnetic wire.

In the ambit of the present disclosure, the feature regarding the first tine and the second tine being asymmetric should be interpreted as meaning that the two tines are different, for example they have different shapes. The presence of the asymmetric tines renders the splice itself asymmetric, i.e. having two sides or halves that are not the same.

Alternatively, the present invention is based on the alternative idea of providing splices that, in an elongated state, have a length greater than 19 mm, for example comprised between 19 mm and 30 mm, for example of 20.95 mm or 28.51 mm.

In the ambit of the present disclosure, the elongate state of the splice corresponds to a state in which the tines of the splice lay on the same XY plane of the base of the splice, instead of protruding from the base and thus forming a U-shaped structure.

Both the two alternative splices solve the technical problem of improving the termination of a flat magnetic wires. More in particular, each of the two splices assure a proper crimping of the tines of the splice around the flat magnet wire, so that a stable electrical connection between the splice and the magnet wire can be guaranteed.

In particular, realizing the first tine and the second tine of the splice according to the present invention, so that they are asymmetric, assures an overlapping crimping of the first tine and the second tine around the flat magnetic wire. An overlapping crimping is a crimping in which the two tines of the splice overlap on top of each other and around the flat magnetic wire. By overlapping the first tine and the second tine a stable electrical connection of the flat magnetic wire and the splice can be assured. A stable connection is a connection having better performance in terms of lifetime, thermal shock resistance and/or resistance to vibrations.

Similarly, realizing the splice according to the present invention, so that, in an elongated state, it has a length greater than 19 mm for example comprised between 19 mm and 30 mm, for example of 28.51 mm, allows assuring a F crimping of the first tine and the second tine around the flat magnetic wire. By making the splice longer, in fact, a stable electrical connection of the flat magnetic wire and the splice can be assured. A stable connection is a connection having better performance in terms of lifetime, thermal shock resistance and/or resistance to vibrations.

According to an embodiment of the present invention, a splice is provided, wherein the splice comprises a base, a first tine and a second tine, each protruding from one of the two opposite extremities of the base so as to form a U-shaped structure and wherein the base is flat so as to define an XY plane, wherein the Y direction is parallel to the insertion direction of the flat magnetic wire into the splice, and wherein the first tine and the second tine are asymmetric, to allow an overlapping crimping of the first tine and the second tine around the flat magnetic wire.

According to an embodiment of the present invention, the free end of the second tine is bent to form a curved structure, facing the inner surface of the first tine.

The curved structure can comprise, for example, an arc profile, with a curvature comprised between 1.6 mm and 2 mm, for example of 1.7 mm. Any other suitable profile can however be used.

Bending one of the free end of one of the tines of the splice, toward the inside of the splice, i.e. the part of the splice into which the flat magnetic wire is inserted, so as to form a curved structure, allow to better close the splice around the flat magnetic wire, assuring a stable electric connection of the same.

More in particular, when such a curved structure is realized on the free end of one of the tines, then an overlapping crimping of the splice around the flat magnetic wire can be performed. More in particular, the tine with the curved structure ends below the tine without the curved structure and in direct contact with the flat magnetic wire. Several experiments have shown that such an overlapping can be very convenient, i.e. it produces a very stable connection. A stable connection is a connection having better performance in terms of lifetime, thermal shock resistance and/or resistance to vibrations.

A connection obtained in this way is very stable in terms of lifetime, thermal shock resistance and resistance to vibrations.

According to an embodiment of the present invention the splice, in an elongated state, has a length greater than 19 mm, for example comprised between 19.1 mm and 30 mm, for example of 28.51 mm.

A standard splice for standard round wires, of the type known from the state of the art, has a length, in an elongated state, comprised between 2.9 mm and 19 mm.

The splice according to the present invention has a length, in an elongated state, greater than 19 mm for example, comprised between 19.1 mm and 30 mm and is, therefore, longer than a standard splice. This feature contributes to adapt the splice so as to terminate a flat magnetic wire, which is larger and thicker that a standard round wire. Moreover, a more stable overlapping crimping can be realized.

The splice according to the present invention can be made of copper or any other suitable conducting material, for example, brass, tin plated brass, gold plated brass or copper-nickel.

According to an alternative embodiment of the present invention, a splice is provided, wherein the splice comprises a base, a first tine and a second tine, each protruding from one of the two opposite extremities of the base so as to form a U-shaped structure and wherein the base is flat so as to define an XY plane, wherein the Y direction is parallel to the insertion direction of the flat magnetic wire into the splice, and wherein the splice, in an elongated state, has a length greater than 19 mm, for example comprised between 19 mm and 23 mm, for example of 20.95 mm.

According to an embodiment of the present invention, the inner surface of the first tine, facing the second tine, on the inner surface of the base 2, facing the inner space of the splice, and the inner surface of the second tine, facing the first tine, comprise a serration to peel the coating layer and to secure the flat magnetic wire inside the splice when the splice is crimped around the flat magnetic wire; the serration comprising a plurality of serration grooves; wherein each serration groove extends from the free end of the first tine to the free end of the second tine and wherein each groove has a different depth, in particular the depth of the serration grooves decreases along the Y direction.

The serration grooves have a profile, for example trapezoidal, which allows peeling the coating layer of the flat magnetic wire, when this is inserted and crimped into the splice. In this way, the electrical connection between the splice and the flat magnetic wire is assured.

Thanks to the trapezoidal profile, the edges of each serration groove cuts the coating layer of the flat magnetic wire, peeling it and allowing the electrical contact between the flat magnetic wire and the splice.

Moreover, the depth of the serration grooves decrease along the Y direction. The flat magnetic wire is inserted inside the splice along the Y direction, so that its terminal end corresponds to the shallowest groove. In this way, during the crimping, the flat magnetic wire can not be damaged.

According to an embodiment of the present invention, serration grooves have a depth comprised between 7 mm and 11 mm, for example between 8 mm and 10 mm.

These values assure a proper peeling of the flat magnetic wire, to obtain the electrical connection between the flat magnetic wire and the splice.

According to an embodiment of the present invention, the depth of the serration grooves decreases of a constant value so that the flat magnetic wire (FMW) is inserted into the splice parallel to the Y direction and so that the its free end corresponds to the shallower groove.

The indicated serration groove dimensions assure at the same time a proper peeling of the flat magnetic wire and ensure the magnetic wire not to be damaged during the crimping procedures.

According to an embodiment of the present invention, the distance between two adjacent grooves is comprised between, 6 mm and 9 mm, for example of 7.5 mm.

These values assure a proper peeling of the flat magnetic wire, to obtain the electrical connection between the flat magnetic wire and the splice.

According to an embodiment of the present invention, each serration groove comprises a trapezoidal profile.

In this way, the edges of each serration groove cuts the coating layer of the flat magnetic wire, peeling it and allowing the electrical contact between the flat magnetic wire and the splice.

According to an embodiment of the present invention, the angle α between the basis and each of the tines is comprised between 92° and 97°, preferably between 93° and 96°, more preferably equal to 94,5°.

Such a configuration of the splice makes the splice particularly suitable to connect a flat magnetic wire. Many experiments performed by the inventors of the present invention, confirm such a statement.

According to an embodiment of the present invention, the base has a length along said X direction comprised between 1.5 mm and 5 mm, for example of 3.85 mm.

This makes the splice suitable to connect a flat magnetic wire. A flat magnetic wire, with a with of 3.55 mm, can easily be placed into the splice.

According to an embodiment of the present invention, the free end of the first tine and/or the free end (4C) of said second tine (4) is tapered.

This facilitates the crimping of the first tine and the second tine around the flat magnetic wire.

The present invention is based on the idea of using a splice according to the present invention, to electrically connect a flat magnetic wire, for example of a stator of an electric motor of an electric car.

There are several reasons why it is necessary to find more efficient techniques to connect flat magnetic wires. For example, flat magnetic wires optimize the filling factor in winding process, permit to exchange more electrical power than the standard round wire. Moreover, they permit a better heat dissipation, enable to improve the design of the coil, improve the efficiency of the magnetic field, do to the better frequency characteristics, and enable to improve the design of the coil bringing to a more efficient magnetic field.

For example, a flat magnetic wire can be that of the stator of a high power electric motor, for example of an electric car.

### Brief description of the drawings

The present invention will be described with reference to the attached figures in which the same reference numerals and/or signs indicate the same part and/or similar and/or corresponding parts of the machine.
Fig. 1 shows a 3D view of a splice according to an embodiment according to the present invention.
Fig. 2 shows the splice shown in Fig. 1, along the XZ plane.
Fig. 3 shows the serration of a splice according to the present invention.
Fig. 4 shows the splice shown in Fig. 1, with a flat magnetic wire inserted in it, and overlapped crimped.
Fig. 5 shows a 3D view of a splice according to a further embodiment according to the present invention.
Fig. 6 shows the splice shown in Fig. 4, along the XZ plane.
Fig. 7 shows the splice shown in Fig. 4, in an elongated position.
Fig. 8 shows the splice shown in Fig. 4, with a flat magnetic wire inserted in it, and F crimped.
Fig. 9 shows a crimping machine according to the present invention.

### Detailed description

In the following, the present invention is described with reference to particular embodiments as shown in the enclosed drawings. Nevertheless, the present invention is not limited to the particular embodiments described in the following detailed description and shown in the figures, but, instead, the embodiments described simply exemplify several aspects of the present invention, the scope of which is defined by the appended claims.

Further modifications and variations of the present invention will be clear for the person skilled in the art. Therefore, the present description has to be considered as including all the modifications and/or variations of the present invention, the scope of which is defined by the appended claims.

For simplicity, identical or corresponding components are indicated in the figures with the same reference numbers.

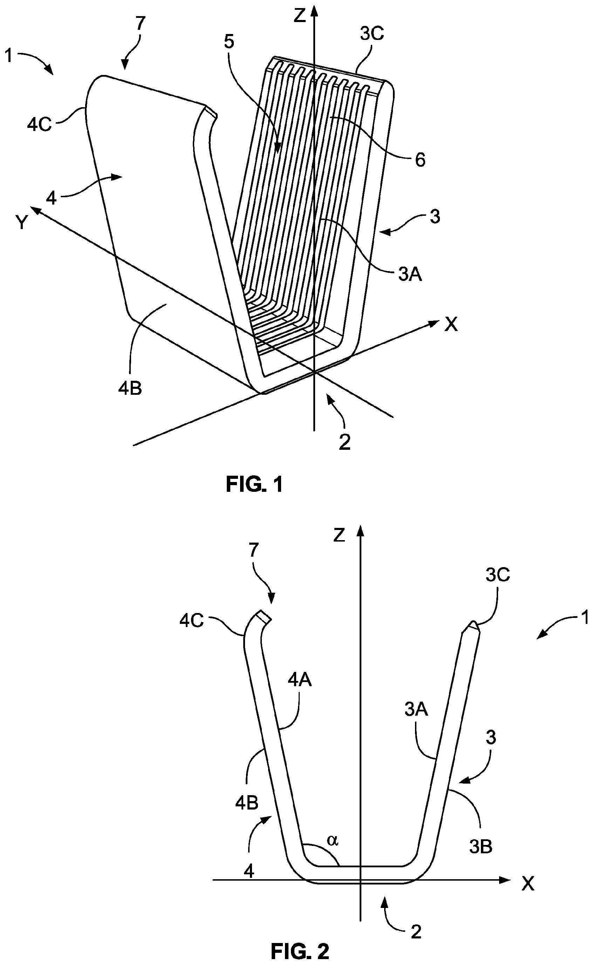

Fig. 1 shows a 3D view of a splice according to an embodiment according to the present invention.

The splice 1, according to the preferred embodiment of the present invention shown in Fig. 1, comprises a base 2, a first tine 3 and a second tine 4.

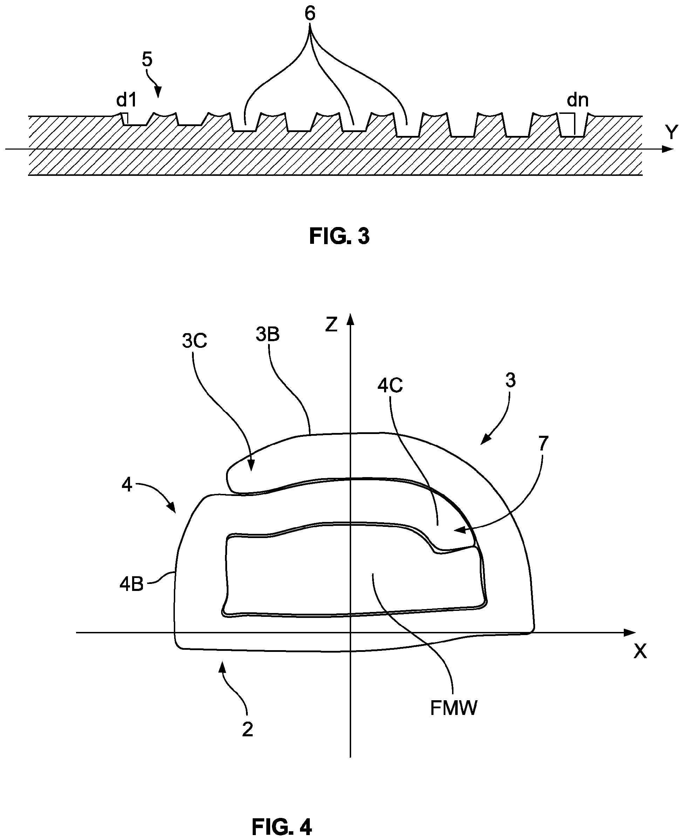

The base 2 is flat and defines a XY plane where the Y direction is parallel to the insertion direction of a flat magnetic wire FMW into the splice 1, as better shown with reference to Fig. 4, and X is the direction perpendicular to the Y direction. More in particular, the Y axis, as shown in Fig. 1, is directed opposite to the insertion direction of the flat magnetic wire FMW inside the splice 1 and divides the base 2 into two equal halves.

A XYZ orthogonal reference system can, therefore, be defined by taking the Z axis so as to be perpendicular to the XY plane.

The first tine 3 and the second tine 4, respectively, protrude from one of the two opposite extremities of the base 2. Since the base 2 is flat, the first tine 3 and the second tine 4 form, with the base 2, a U-shaped structure.

The first tine 3 and the second tine 4 are not symmetric with respect to the ZY plane. The free end 4C of the second tine 4 is, in fact, bent to form a curved structure 7, facing the inner surface 3A of the first tine 3.

The curved structure 7 comprises, in the embodiment shown in Fig. 1, an arc profile with a curvature comprised between 1.6 mm and 2 mm, for example of 1.7 mm. The curved structure can comprise any other suitable profile, for example a linear profile.

Bending the free end 4C of the second tines 4 of the splice 1, toward the inside of the splice 1, i.e. the part of the splice 1 into which the flat magnetic wire FMW is inserted, so as to form a curved structure 7, allow to better close the splice 1 around the flat magnetic wire during the crimping procedure. For the same reason the free end 3C of the first tine 3 comprises a tapered profile.

In fact, when a curved structure 7 is realized on the free end 4C of the second tine 4, and the free end 3C of the first tine 3 has a tapered profile, then an overlapping crimping of the splice 1 around the flat magnetic wire FMW can be realized, as will be described in more detail with reference to Fig. 4.

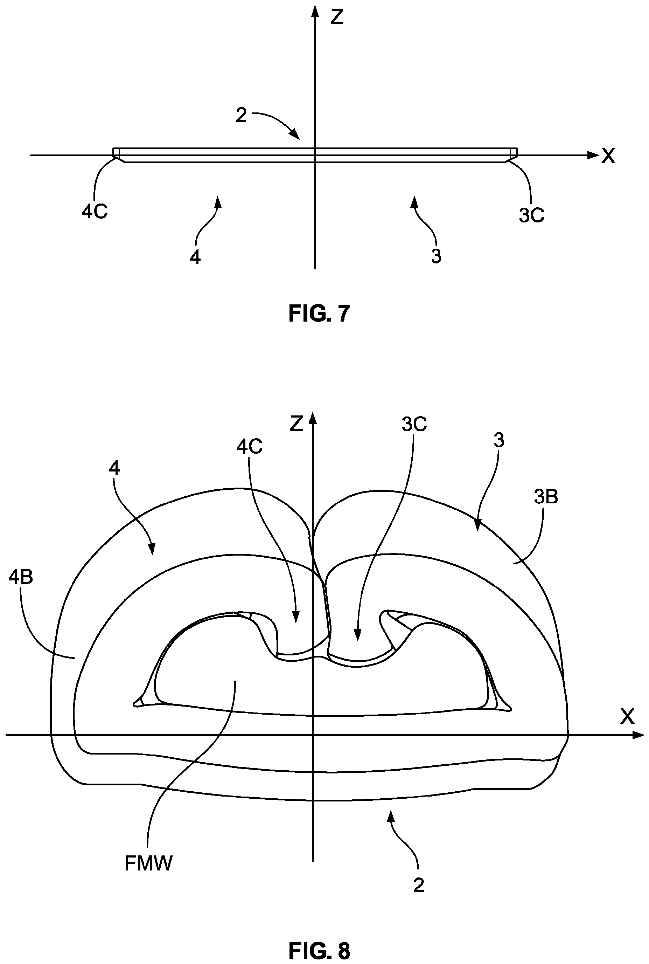

The length of the splice 1 in an elongated state, as shown in Fig. 7, that means with the first tine 3 and the second tine 4 on the XY plane, is greater that 19 mm, for example comprised between 19.1 mm and 30 mm, for example of 28.51 mm.

A standard splice for standard round wires, of the type known from the state of the art, has a length, in an elongated state, comprised between 2.9 mm and 19 mm.

The splice according to the present invention is, therefore, longer than a standard splice. This feature contributes to adapt the splice so as to terminate a flat magnetic wire, which is larger and thicker that a standard round wire. Moreover, a more stable overlapping crimping can, in this way, be realized.

Splice 1, further, comprises a serration 5 realized on the inner surface 3A of the first tine 3, facing the second tine 4, on the inner surface 2A of the base 2, facing the inner space of the splice 1, and on the inner surface 4A of the second tine 4, facing the first tine 3.

One of the purposes of the serration 5 is to peel the coating layer of the flat magnetic wire FMW when this is crimped inside the splice 1, so as to assure the electrical connection between the flat magnetic wire FMW and the splice 1. Another purpose is to firmly block the flat magnetic wire FMW inside the splice 1, preventing any inappropriate movement of the same, once it has been crimped inside the splice 1. The serration 5 will be described in more detail, with reference to Fig. 3.

The splice according to the present invention is made of copper, but any other suitable conductor material can be used.

Fig. 2 shows the splice shown in Fig. 1, along the XZ plane.

Fig. 2 shows a front view of the splice shown in Fig. 1. Fig. 2 clearly shows that the angle α between the basis 2 and each of the tines 3, 4 is comprised between 92° and 97°, preferably between 93° and 96°, more preferably equal to 94,5°.

Such a configuration of the splice makes the splice particularly suitable to connect a flat magnetic wire. Many experiments performed by the inventors of the present invention, confirm such a statement.

Fig. 3 shows the serration of a splice according to the present invention.

The serration 5 comprises serration grooves 6, wherein each serration groove 6 extends from the free end 3C of the first tine 3 to the free end 4C of the second tine 4.

The distance, along the Y axis, between two adjacent grooves 6 is comprised between, 6 mm and 9 mm, for example of 7.5 mm.

The serration grooves 6 have a depth dₙ comprised between 7 mm and 11 mm, for example between 8 mm and 10 mm.

More in particular, the depth dₙ of the serration grooves 6 increases of a constant value along the Y direction. The flat magnetic wire FMW is inserted inside the splice 1 so that its free end correspond to the serration groove 6 having the shallower depth d₁. Such a gradient in the serration grooves depth dₙ assures the flat magnetic wire FMW not to be damaged during the crimping process.

The number of serration grooves 6 can be, for example comprised between 3 and 9, for example equal to 3, 4, 5, 6, 6, 7, 8 or 9.

Moreover, each serration groove 6 comprises a trapezoidal profile. Such a profile assures a proper peeling of the coating layer of the magnet wire, so that a proper electrical connection between the flat magnetic wire and the splice is realized. Any other suitable profile can be used.

Such a profile also firmly block the flat magnetic wire FMW inside the splice 1. It, in fact, allows the penetration of the serration 5 into the flat magnetic wire FMW, preventing any inappropriate movement of the same, once it has been crimped inside the splice 1.

Fig. 4 shows the splice shown in Fig. 1, with a flat magnetic wire inserted in it, and overlapped crimped.

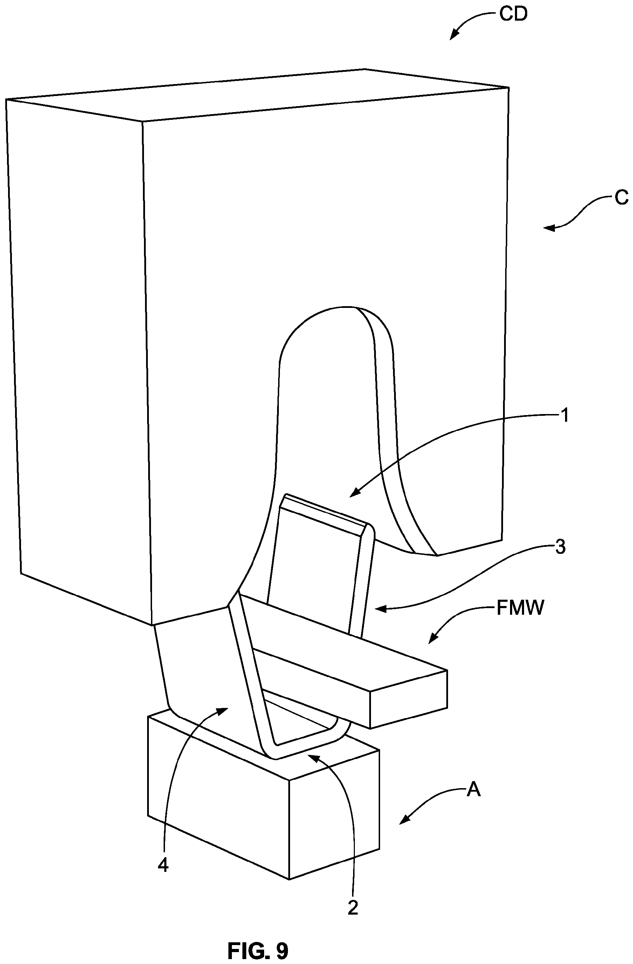

The figures shows the splice shown in Fig. 1, with a flat magnetic wire FMW inserted in it. The first tine 3 and the second tine 4 of the splice 1 have been bend on the flat magnetic wire FMW during the crimping process. Due to the curved structure 7 on the free end 4C of the second tine 4, and to the tapered free end 3C of the first tine 3, during the crimping process, the second tine 4 slipped under the first tine 3, realizing a so called overlapping crimping. Several experiments, performed by the inventors of the present invention, have shown that such an overlapping can be very convenient, i.e. it produces a very stable connection. A crimping machine to realize a crimping process according to the present invention is shown in Fig. 9.

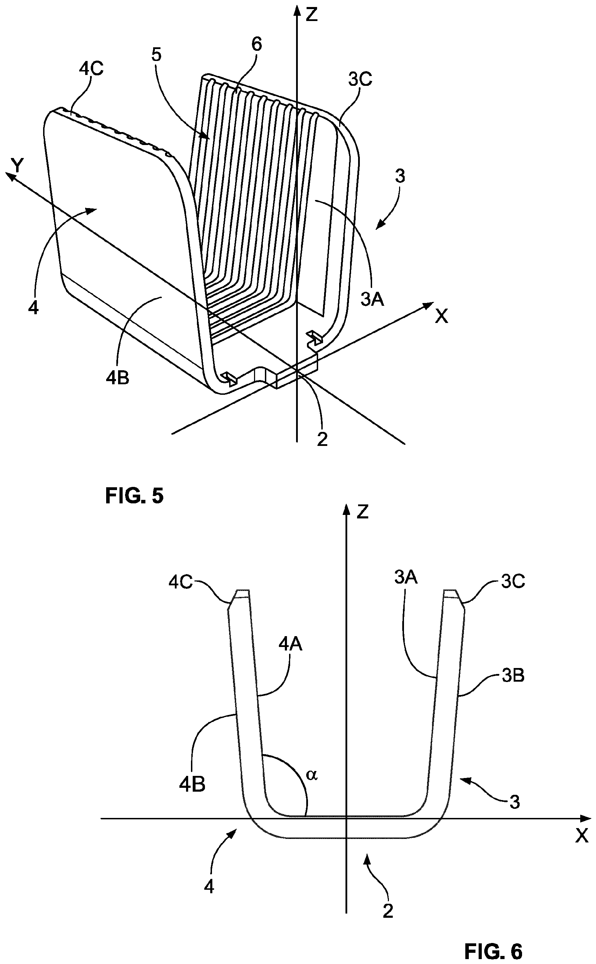

Fig. 5 shows a 3D view of a splice according to a further embodiment according to the present invention.

The splice 1, according to a further preferred embodiment of the present invention shown in Fig. 5, comprises a base 2, a first tine 3 and a second tine 4.

The base 2 is flat and defines a XY plane where the Y direction is parallel to the insertion direction of a flat magnetic wire FMW into the splice 1, as better described with reference to Fig. 8, and X is the direction perpendicular to the Y direction. More in particular, the Y axis is directed opposite to the insertion direction of the flat magnetic wire FMW inside the splice 1 and divides the base 2 into two equal halves.

A XYZ orthogonal reference system can, therefore, be defined by taking the Z axis so as to be perpendicular to the XY plane.

The first tine 3 and the second tine 4, respectively, protrude from one of the two opposite extremities of the base 2. Since the base 2 is flat, the first tine 3 and the second tine 4 form, with the base 2, a U-shaped structure.

The first tine 3 and the second tine 4 are symmetric with respect to the ZY plane. The free end 3C of the first tine 3 and the free end 4C of the second tine 4 are tapered. In this way, the free end 3C of the first tine 3 and the free end 4C of the second tine 4 interact, during the crimping process, so to realize an F crimping, as better shown in Fig. 8.

The length of the splice 1 in an elongated state, as shown in Fig. 7, that means with the first tine 3 and the second tine 4 on the XY plane, is greater than 19 mm, for example comprised between 19.1 mm and 30 mm, for example of 20.95 mm.

A standard splice for standard round wires, of the type known from the state of the art, has a length, in an elongated state, comprised between 2,9 mm and 19 mm.

The splice according to the present invention is, therefore, longer than a standard splice. This feature is essential to adapt the splice so as to terminate a flat magnetic wire, which is larger and thicker that a standard round wire. In this way, a stable F crimping can be realized.

Splice 1, further, comprises a serration 5 realized on the inner surface 3A of the first tine 3, facing the second tine 4, on the inner surface 2A of the base 2, facing the inner space of the splice 1, and on the inner surface 4A of the second tine 4, facing the first tine 3.

One of the purposes of the serration 5 is to peel the coating layer of the flat magnetic wire FMW when this is crimped inside the splice 1, so as to assure the electrical connection between the flat magnetic wire FMW and the splice 1. Another purpose is to firmly block the flat magnetic wire FMW inside the splice 1, preventing any inappropriate movement of the same, once it has been crimped inside the splice 1. The serration 5 has already been described in more detail, with reference to Fig. 3.

The splice according to the present invention is made of copper, but any other suitable conductor material can be used.

Fig. 6 shows the splice shown in Fig. 5, along the XZ plane.

Fig. 6 shows a front view of the splice shown in Fig. 5. In Fig. 6 is clearly shown that the angle α between the basis 2 and each of the tines 3, 4 is comprised between 92° and 97°, preferably between 93° and 96°, more preferably equal to 94,5°.

Such a configuration of the splice, makes the splice suitable to connect a flat magnetic wire. Many experiments performed by the inventors of the present invention, confirm such a statement.

Fig. 7 shows the splice shown in Fig. 5, in an elongated state.

In the ambit of the present disclosure, "elongated state" refers to a state in which the first tine 3 and the second tine 4 of the splice 1 lay on the same XY plane of the base of the splice, instead of protruding from the base so as to form a U-shaped structure.

The length of the splice 1, from the free end 3C of the first tine 3 to the free end 4C of the second tine 4 is greater that 19 mm, for example comprised between 19.1 mm and 30 mm, for example of 20.95 mm.

Fig. 8 shows the splice shown in Fig. 5, with a flat magnetic wire inserted in it, and F crimped.

The figures shows the splice shown in Fig. 5, with a flat magnetic wire FMW inserted in it. The first tine 3 and the second tine 4 of the splice 1 have been bend on the flat magnetic wire FMW during the crimping process. Due to the tapered profile of the free end 4C of the second tine 4, and the tapered profile of the free end 3C of the first tine 3, during the crimping process, the second tine 4 and the first tine 3, realize a so called F crimping. Several experiments, performed by the inventors of the present invention, have shown that such an F can be very convenient, i.e. it produces a very stable connection. A crimping machine to realize a crimping process according to the present invention is shown in Fig. 9.

Fig. 9 shows a crimping machine according to the present invention.

A crimper device CD, as used according to the present invention, comprises an anvil A on which the splice 1 is placed and a crimper C to crimp the splice 1. The flat magnetic wire FWM to be connected is put into the splice, then the crimper C crimps the splice 1 on top of the wire FMW.

The crimper C comprises an opening O which can comprise a bell profile or an F profile. The opening O leads the movement of the first tine 3 and of the second tine 4 during the crimping process.

A crimper C comprising an opening O with a bell profile can be used to crimp a splice according to the present invention, as shown in Fig. 1, having asymmetric tines. A bell profile, in fact, is more suitable to obtain an overlapping crimping.

A crimper C comprising an opening O with an F profile can be used to crimp a splice according to the present invention, as shown in Fig. 5, having symmetric tines. An F profile, in fact, is more suitable to obtain an F crimping.

Even though the present invention has been described with reference to the embodiments described above, it is clear to those skilled in the art that it is possible to make different modifications of the present invention in light of the teaching described above and in the appended claims, without departing from the scope of protection of the invention.

For example, the number of serration grooves shown in the figures is 9, but it can vary according to the needs.

Moreover, according to the embodiments shown, the splice is made of copper, but any other suitable conductor material can be used.

Finally, those aspects that are considered known by those skilled in the art have not been described in order to avoid needlessly excessively obscuring the description of the invention.

Consequently, the invention is not limited to the embodiments described above, but is only limited by the scope of protection of the appended claims.

### Reference numbers

- 1: splice
- 2: base
- 3: first tine
- 3A: first tine inner surface
- 3B: first tine outer surface
- 3C: first tine free end
- 4: second tine
- 4A: second tine inner surface
- 4B: second tine outer surface
- 4C: second tine free end
- 5: serration
- 6: serration groove
- dₙ: groove depth
- 7: curved structure

- FMW: flat magnetic wire
- EM: electric motor
- CD: crimper device
- A: anvil
- C: crimper

## Claims

1. Splice (1) for the electrical connection of a flat magnetic wire (FMW), said splice (1) comprising a base (2), a first tine (3) and a second tine (4), each protruding from one of the two opposite extremities of said base (2) so as to form a U-shaped structure; **characterized in that:** said base (2) is flat so as to define an XY plane, wherein the Y direction is parallel to the insertion direction of said flat magnetic wire (FMW) into said splice (1) **and in that:** said first tine (3) and said second tine (4) are asymmetric, so as to allow an overlapping crimping of said first tine (3) and said second tine (4) around said flat magnetic wire (FMW).

2. Splice (1) according to claim 1, wherein the free end (4C) of said second tine (4) is bent to form a curved structure (7), facing said inner surface (3A) of said first tine (3).

3. Splice (1) according to any of the previous claims, wherein said splice (1), in an elongated state, has a length greater than 19 mm, for example comprised between 19.1 mm and 30 mm, for example of 28.51 mm.

4. Splice (1) for the electrical connection of a flat magnetic wire (FMW) said splice (1) comprising a base (2), a first tine (3) and a second tine (4), each protruding from one of the two opposite extremities of said base (2) so as to form a U-shaped structure; **characterized in that:** said base (2) is flat so as to define an XY plane, wherein the Y direction is parallel to the insertion direction of the flat magnetic wire (FMW) into the splice (1) **and in that:** said splice (1), in an elongated state, has a length greater that 19 mm, for example comprised between 19.1 mm and 30 mm, for example of 20.95 mm.

5. Splice (1) according to any of the previous claims, wherein the inner surface (3A) of said first tine (3), facing said second tine (4), the inner surface (2A) of said the base (2), facing the inner space of the splice (1), and the inner surface (4A) of said second tine (4), facing said first tine (3), comprise a serration (5) to peel said coating layer (cl) and to secure said flat magnetic wire (FMW) inside said splice (1) when the splice (1) is crimped around said flat magnetic wire (FMW); said serration (5) comprising a plurality of serration grooves (6), wherein each serration groove (6) extends from the free end (3C) of said first tine (3) to the free end (4C) of said second tine (4) and wherein each groove (6) has a different depth (dₙ), in particular the depth (dₙ) of said serration groves decreases along the Y direction.

6. Splice (1) according to claim 6, **wherein** said serration grooves (6) have a depth (dₙ) comprised between 7 mm and 11 mm, for example between 8 mm and 10 mm.

7. Splice (1) according to any of claims 5 or 6, **wherein** said depth (dₙ) of said serration grooves (6) decreases of a constant value so that the flat magnetic wire (FMW) is inserted into the splice (1) parallel to the Y direction and so that its free end corresponds to the shallower groove (6).

8. Splice (1) according to any of claims 5 to 7, **wherein** the distance between two adjacent grooves (6) is comprised between, 6 mm and 9 mm, for example of 7.5 mm.

9. Splice (1) according to any of the claims from 5 to 8, **wherein** each of said serration grooves (6) comprises a trapezoidal profile.

10. Splice (1) according to any of the previous claims, **wherein** the angle (α) between said basis (2) and each of said tines (3, 4) is comprised between 92° and 97°, preferably between 93° and 96°, more preferably equal to 94,5°.

11. Splice (1) according to any of the previous claims, **wherein** said base (2) has a length along said X direction comprised between 1.5 mm and 5 mm, for example of 3.85 mm.

12. Splice (1) according to any of the previous claims, **wherein** the free end (3C) of said first tine (3) and/or the free end (4C) of said second tine (4) is tapered.

13. Use of a splice (1) according to any of the claims from 1 to 12, to electrically connect a flat magnetic wire (FMW), for example of a stator of an electric motor (EM).
